# EUROPEAN PATENT SPECIFICATION

(11) **EP 0 307 487 B1**
(45) Date of publication and mention of the grant of the patent: **10.03.1993**
(21) Application number: 87113398.9
(22) Date of filing: 14.09.1987
(51) Int. Cl.: G02B 6/32, G02B 27/30

(54) **Collimator lens for optical fiber**
Kollimatorlinse für Glasfasern
Collimateur pour des fibres optiques

(43) Date of publication of application: 22.03.1989
(73) Proprietor: MITSUBISHI RAYON CO., LTD., Tokyo 104 (JP)
(72) Inventor: Kaneoko, Yasuhiro, Nagoya-shi Aichi (JP); Masuzawa, Tokihiko, Kani-shi Gifu (JP); Takesue, Masatoshi, Seto-shi Aichi (JP); Mori, Mitsuo, Shinjuku-ku Tokyo (JP)
(74) Representative: Ritter und Edler von Fischern, Bernhard,Dipl.-Ing.

(56) References cited:
- DE-B- 1 947 719
- FR-A- 2 509 054
- US-A- 4 534 616
- PATENT ABSTRACTS OF JAPAN, vol. 10, no. 190, 4th July 1986, page 91 P 474 & JP-A-61035407
- PATENT ABSTRACTS OF JAPAN, vol. 8, no. 137, 26th June 1984, page 112 P 282 & JP-A-59038706

## Description

The present invention relates to a collimator lens for an optical fiber, which is adapted to convert divergent lights emerging from a light emitting end face of the optical fiber into a parallel beam.

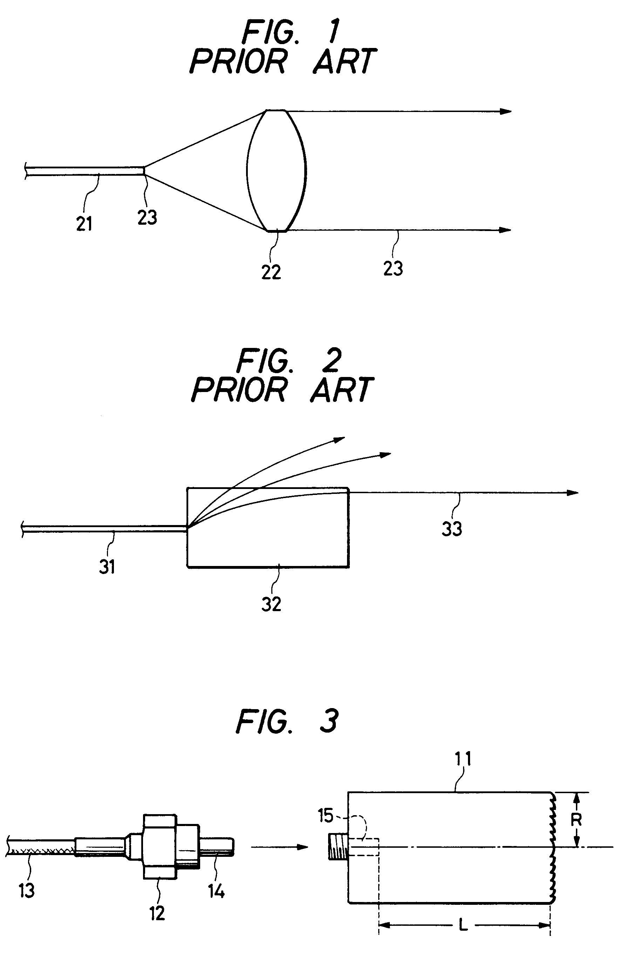

A device including an optical fiber and a collimator lens attached to a light emitting end face of the optical fiber can be utilized as light transmittive optical fiber sensor, light reflective type optical fiber sensor or a light bifurcation device.
In a conventional device, shown in Fig. 1, a convex lens 22 formed of glass or transparent plastic material is disposed so that a light emitting end face of an optical fiber 21 is at a focal point 23 of the convex lens 22.

Another type of the conventional device is shown in Fig. 2, comprising a rod lens 32 which has convergent distribution of refractive index, abutting a light emitting end face of an optical a fiber 31 positioned at one end face of the rod lens 32. The latter type is disclosed in Japanese patent application laid open No. 59-38706. In both the devices, parallel light 33 emerges from the end of the respective collimator lens.

In the collimator lens of Fig. 1, it is necessary to provide sufficient precision effectively to convert divergent light beam radiated from the optical fiber end into parallel light beam by way of the collimator lens 22. This means that, the collimator lens 22 requires high precision machining. Accordingly, the resultant lens costly. Further, it is also necessary precisely to control the angular orientation of the collimator lens, the position of the focal point thereof, the position of the light emitting end face of the optical fiber, and angular positional relationship therebetween. If these positional relationships are not precisely followed, it would be impossible to provide parallel light beams.

Further , according to the second type of the conventional optical fiber collimator shown in Fig. 2, the rod lens has a diameter not more than about 2 mm, otherwise the rod lens would not provide a precise refractive index distribution. Therefore, the second type is not available for wide utility. Moreover, since the rod lens having convergent refractive index distribution has a small diameter, a high precision technique is required for axial alignment between the rod lens axis and the light axis at the light emitting end face of the optical fiber. If the axes are offset from each other, it would be impossible to provide precise parallel light, moreover, the conventional rod lens cannot necessarily have enough numerical aperture (NA) to be able to be adapted to high NA optical fibers such as plastic optical fibers so that the conversion from the divergent light to a parallel luminous flux cannot be performed effectively.

US-A-4 534 616 describes a fiber optic connector comprising a resilient ferrule member having a lens at a forward end which communicates with an internal bore in which a fiber optic transmission member is disposed with the end of the fiber optic transmission member being located substantially at the focal point of the lens. An index-matching material is located in the bore of the ferrule member to protect the fiber optic transmission member.

### SUMMARY OF THE INVENTION

It is therefore, an object of the present invention to overcome the above-described prior art disadvantages and drawbacks and to provide an improved collimator for an optical fiber.

Another object of the present invention is to provide a collimator capable of easily allowing axial alignment between the axis of a collimator and the optical axis of the light emitted from an end face of an optical fiber.

Still another object of the present invention is to provide the collimator lens which can be easily produced.

In accordance with the present invention, a collimator lens is provided with a cylindrical member having an effective radius R and effective length L, said cylindrical member being formed of optically transparent material having refractive index of n₁, said cylindrical member having one circular end portion provided with a connector portion connected to an optical fiber, the other circular end portion being provided with a Fresnel lens characterized in that the lens has a positive focal length F which is shorter than the effective length, said focal length F, said effective length L, said effective radius R and said refractive index n₁ satisfying the following formulae (I) and (II);

$\text{F/L = tan (sin-¹(NA/n₁))/tan (sin-¹(NA)) I}$
$\text{R≧ L.tan (sin-¹(NA/n₁)) II}$

where NA is numeral aperture of said optical fiber.

### BRIEF DESCRIPTION OF THE DRAWINGS

Fig. 1 is a schematic view showing one example of a conventional collimator lens coupled with an optical fiber and shows a light path passing through the conventional system;
Fig. 2 is a schematic view showing another example of a conventional collimator lens coupled with an optical fiber, and shows a light path passing through the second conventional system;
Fig. 3 is a schematic view showing a combination of a collimator lens according to the present invention and an optical fiber assembled thereto;
Fig. 4 is an explanatory diagram showing operation of the optical fiber collimator lens according to the present invention;
Figs. 5 and 6 shown examples of Fresnel lens patterns formed at one end face of the collimator lens according to the present invention;
Fig. 7 is a schematic diagram showing an apparatus for measuring characteristics of an optical fiber collimator lens according to the present invention;
figs. 8(a) and 8(g) are graphical representations showing optical transmission characteristics of collimator lenses which are measured by the apparatus shown in Fig. 7: and
Figs. 9(a) and 9(b) are schematic views showing light bifurcation devices which use optical fiber collimators according to the present invention.

### DETAILED DESCRIPTION OF THE PREFERRED EMBODIMENTS

A collimator lens for an optical fiber according to the present invention will be described with reference to the accompanying drawings.

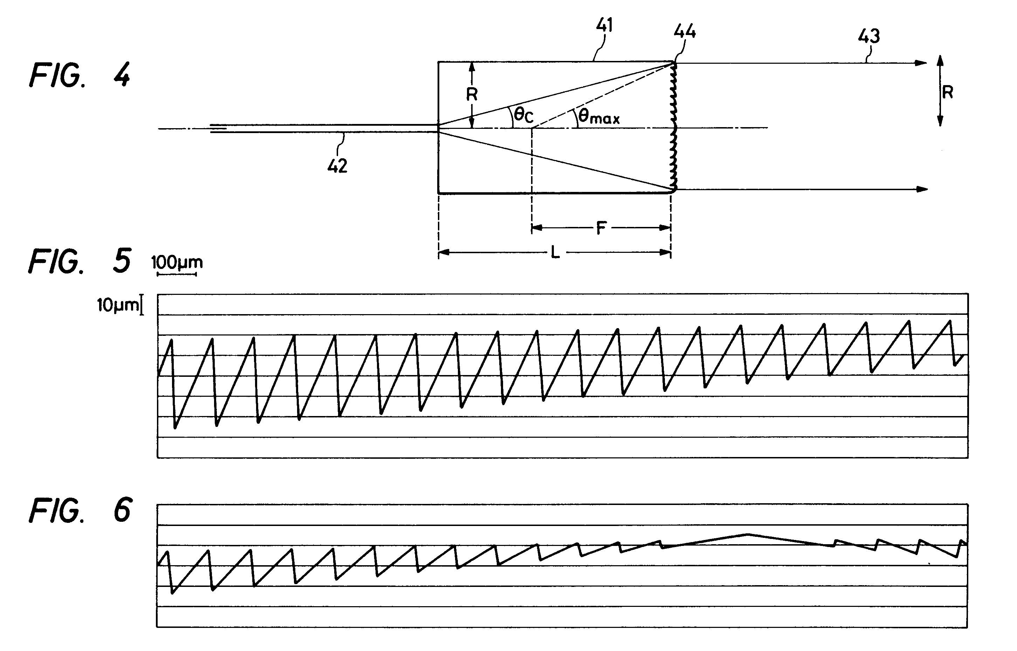

Fig. 4 is a schematic cross-sectional view showing a collimator lens 41 of the present invention coupled with an optical fiber 42. In Fig. 4, ϑc designates the light spreading angle of light emitted from a light emitting end face of the optical fiber 42 which propagates through the collimator lens 41. If the optical fiber has a numerical aperture NA, and the collimator lens is formed of an optically transparent material having refractive index n₁, the light spreading angle ϑc should meet with the following equation (III):

$\text{ϑc = sin⁻¹(NA/n₁) (III)}$

Furthermore, in order to provide parallel luminous flux 43 from the tip end face of the collimator lens the effective axial length L and effective radius R of the collimator lens must satisfy the following formula (II):

$\text{R ≧ L·tanϑc = L.tan{sin⁻¹(NA/n₁)} (II)}$

If R is smaller than L·tanϑc, then some of the light propagating through the collimator is reflected on the inside wall before reaching to the end face. Such collimator lens cannot efficiently produce parallel luminous flux from the light radiated from the optical fiber. Therefore, the radius R of the collimator lens must satisfy with the above formula (II).

Further, the collimator lens should have a circular end face 44 formed with a Fresnel lens having a positive focal length F in order to produce parallel luminous flux from the circular end face of an effective radius R, the parallel luminous flux being formed from light propagating through the collimator lens with an initial spreading angle ϑc originating from the light emitting end face of the optical fiber.

With reference to Fig. 4, the following equation (IV) must also be satisfied by the lens of focal length F, effective axial length L, with light of a spreading angle ϑmax:

$\text{F = L·tanϑc/tanϑmax (IV)}$

In the equation (IV), L designates the effective axial length of the collimator lens. This length is measured from the optical fiber end face disposed at one end of the collimator lens to the other end face thereof provided with the Fresnel lens pattern.

ϑmax can be represented by the following equation (V):

$\text{ϑmax = sin⁻¹(NA) (V)}$

Therefore, the equation (IV) can be converted into the following equation (VI):

$\text{F = L·tan {sin⁻¹(NA/n₁)}/tan{sin⁻¹(NA)} (VI)}$

The optical fiber coupled to the collimator lens according to the present invention and having numerical aperture NA is selected from the group consisting of polymethylmethacrylate core optical fiber having numerical aperture NA of from 0.45 to 0.55, polystylene core optical fiber having NA of from 0.53 to 0.58, polycarbonate core optical fiber having NA of from 0.70 to 0.80, etc.

Furthermore, the collimator lens having refractive index n₁ according to the present invention is selected from the group consisting of acrylic group resin having refractive index n₁ of from 1.47 to 1.50, polystylene group resin having n₁ of from 1.50 to 1.58, silicon group resin having n₁ of from 1.35 to 1.60 and fluorine group resin having n₁ of from 1.30 to 1.42.

When using the collimator lens for optical fiber according to the present invention, the divergent luminous flux emitted from the optical fiber end face can be converted into parallel luminous flux, which can be transmitted through an atmosphere for an increased distance with high directivity.

When the divergent luminous flux emitted from the optical fiber end is converged by means of the convex-shaped collimator lens, the luminous flux propagates sequentially through, the optical fiber, air, collimator lens, and air, whereby Fresnel reflections may occur at each phase boundary. there may be an attenuation of several percentage. However, light loss due to Fresnel reflection can be greatly reduced by placing by an index matching oil, such as silicone oil, in the boundary face between the fiber end and the collimator lens.

The collimator lens according to the present invention can convert luminous flux emerging from the optical fiber end face into parallel luminous flux which can be effectively transmitted for a long distance with reduced amount of transmission loss. Therefore, the collimator lens of the present invention provides such advantages and is available as devices for optical communication such as an optical bifurcation device and a wave length devider, and other optical elements.

On example according to the present invention will be described.

### EXAMPLE

Three types of optical fibers, having NA of 0.5 for optical transmission comprising a core formed of polymethylmethacrylate and a clad formed of fluorine resin were prepared. A first fiber had an outer diameter of 1mm(ESKA EH 4001; Trademark of Mitsubishi Rayon Co., Ltd.), the second fiber had an outer diameter of 500µm (ESKA EH 2001, Trademark of Mitsubishi Rayon Co., Ltd. ), and the third fiber had an outer diameter of 250µm (ESKA EH 10, Trademark of Mitsubishi Rayon Co., ltd.,). Each of the three optical fibers was subjected to cable processing.

Polymethylmethacrylate having refractive index n₁ of 1.492 was used as the raw material of the collimator lens. Two types of collimator lenses were prepared, each having effective radius of 5mm and 10mm. Light spreading angle ϑc radiated from the fiber end into the collimator lens was 20 degrees as is apparent from equation (III). Further, from the formula (II), the effective axial lengths L of the two collimator lenses were L = 13.74mm with respect to the lens having the radius of 5mm, and L = 27.48mm with respect to the lens having the radius of 10mm. Furthermore, focal lengths F were;
- F =: 8.64mm for radius 5mm lens
- F =: 16.93mm for radius 10mm lens
as is apparent from equation (IV).

Two cylindrical rods formed of polymethylmethacrlate having radii of 5mm and 10mm were prepared. Each of end faces of the rods was subjected to machining by numerial control lathe, so that fresnel lenses having focal lengths (F) of 8.64mm and 16.93mm were formed. The pitches of the frensnel lenses pattern were about 100µm. The Fresnel patterns were measured by needle touching type surface roughness tester, and resultant measuring patterns are shown in Figs. 5 and 6.

As shown in Fig. 3, each end tip of the three types of optical fibers 13 was connected with optical fiber connector 12. An end tip portion 14 of each optical fiber was inserted into each coupling portion 15 of the collimator lens. An index matching liquid of silicone oil was coated over the tip end portion 14 and it was inserted into the coupling portion 15 thereby to provide an optical fiber element coupling with the collimator lens.

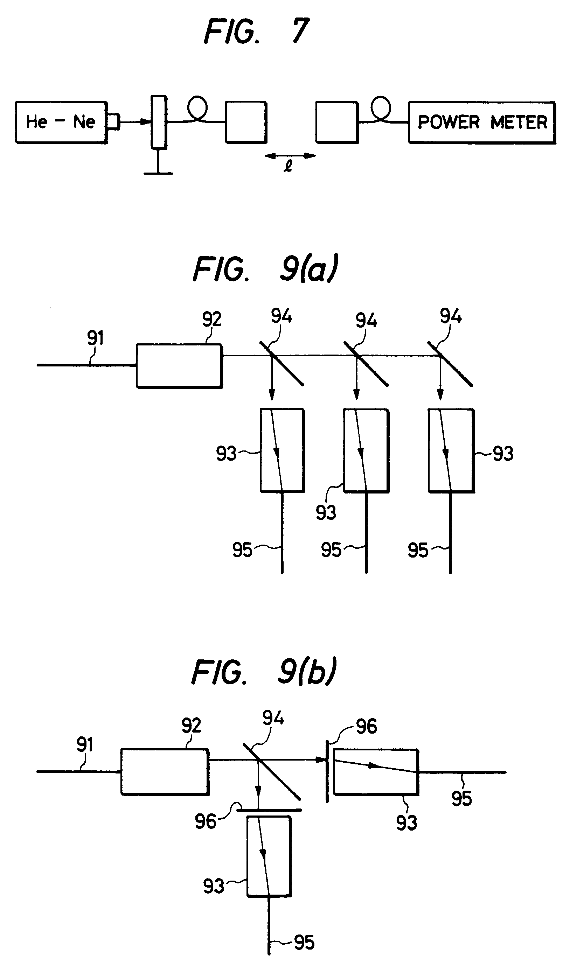

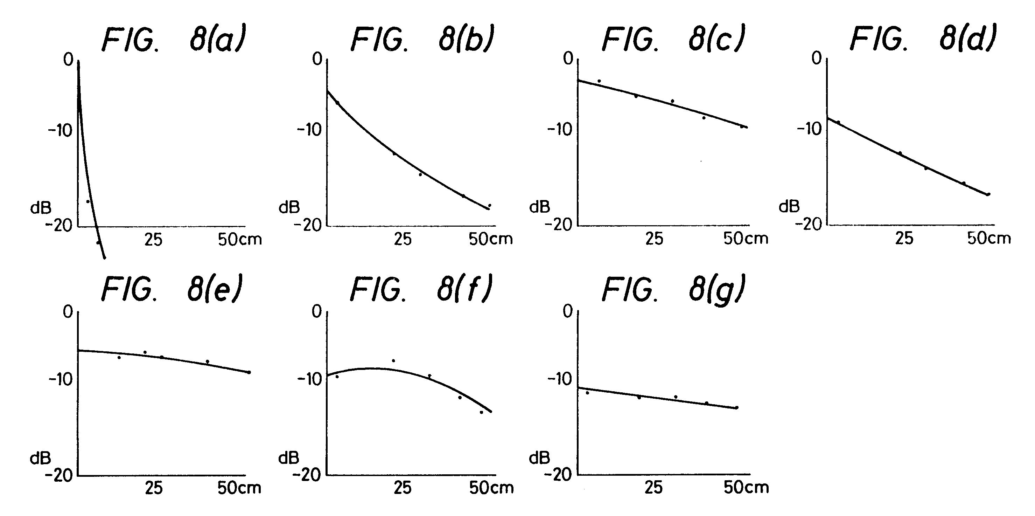

Two independent optical fiber elements coupled with the collimator lenses were prepared. As shown in Fig. 7, free end faces (fresnel lens sides) were confronted with each other and spaced apart by a distance ℓ. One optical fiber end of one optical fiber element was connected to a He-Ne laser source, and one optical fiber end of the other optical fiber element was connected to an optical power meter. On changing the distance ℓ, the corresponding light attenuation was measured for light radiated from the collimator lens face (Fresnel lens side). The results are shown in Figs. 8(a) to 8(g) and Table 1 below.

As shown in Fig. 8(a), the light transmission distance was only several cm, if a collimator lens according to the present invention was not coupled to the fiber element but optical fiber ends were merely confronted with each other for optical tranmission. On the other hand, as shown in Figs. 8(b) to 8(g), if the optical fiber element is provided with the collimator lens of the present invention, the light transmittable distance became very long exceeding 50cm. Such optical fiber element, provided with the collimator lens, were able to be used as light bifurcation devices as shown in Figs. 9(a) and 9(b). The light bifurcation element includes an optical tranmission optical fiber 91, a collimator lens 92 connected to the light emitting end face of the fiber, half mirrors 94, collimator lenses 93 for receiving fiburcated luminous flux, and light receiving optical fibers 95. These collimator lenses 92 and 93 are in accordance with the present invention. If desired, an optical filter 96 may be disposed in front of the collimator 93 of light receiving elements, as shown in Fig. 9(b).

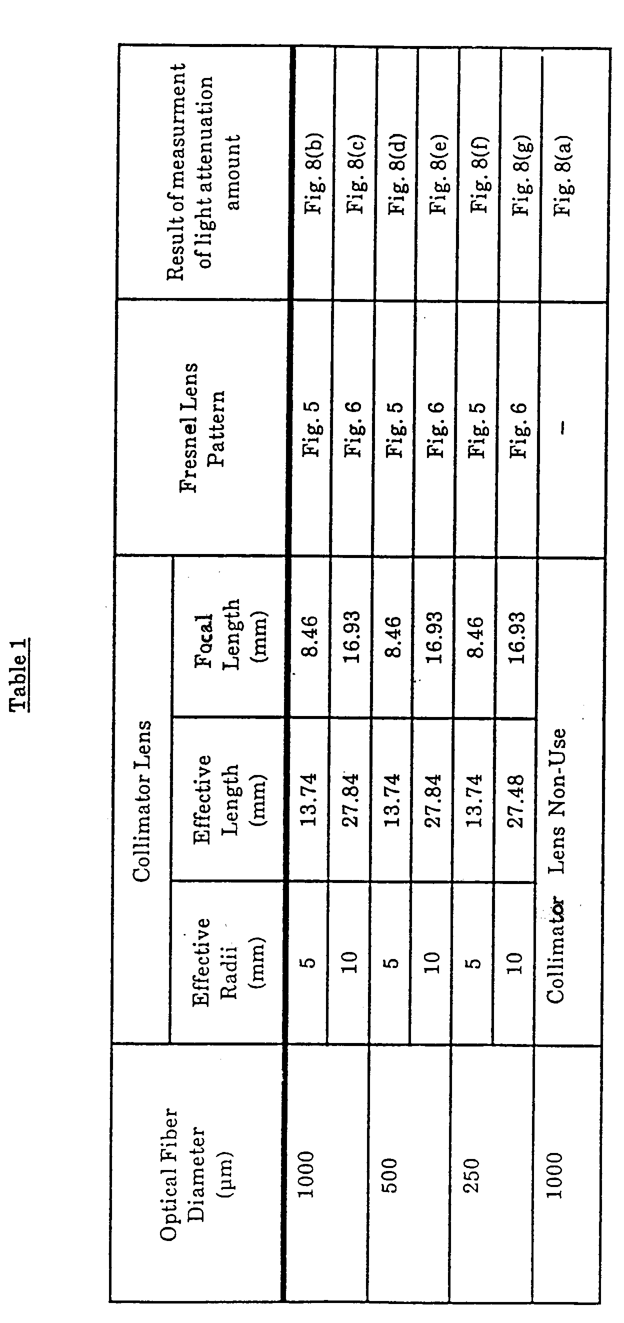

While the invention has been described in detail with reference to specific embodiment thereof, it will be aparent to one skilled in the art that various changes and modification can be made therein without departing from the scope of the invention.

## Claims

1. A collimator lens comprising a cylindrical member having an effective radius R and effective length L, said cylindrical member being formed of optically transparent material having refractive index of n₁, said cylindrical member having one circular end portion provided with a connector portion connected to an optical fiber, the other circular end portion being provided with a Fresnel lens characterized in that the lens has a positive focal length F which is shorter than the effective length, said focal length F, said effective length L, said effective radius R and said refractive index n₁ satisfying the following formulae (I) and (II);
$\text{F/L = tan (sin-¹(NA/n₁))/tan (sin-¹(NA)) I}$
$\text{R≧ L.tan (sin-¹(NA/n₁)) II}$
where NA is numeral aperture of said optical fiber.

2. A collimator lens as claimed in claim 1, wherein said cylindrical member is formed of a material selected from the group consisting of acrylic resin, polystylenic resin, siliconic resin and fluoric resin.

3. A collimator lens as claimed in claim 1, wherein said optical fiber has a core formed of a material selected from the group consisting of polymethylmethacrylate, polystylene and polycarbonate.

4. A collimator lens as claimed in claim 1, further comprising a matching liquid between the light emitting end face of said optical fiber and said lens.

## Patentansprüche

1. Eine Kollimatorlinse umfassend ein zylindrisches Bauteil mit einem wirksamen Radius R und einer wirksamen Länge L, wobei das besagte zylindrische Bauteil aus optisch durchlässigem Material gebildet ist, das einen Brechungsindex n₁ besitzt, wobei das besagte zylindrische Bauteil einen runden Endabschnitt mit einem mit einer optischen Faser verbundenen Verbinderteil besitzt, wobei der andere runde Endabschnitt mit einer Fresnel-Linse versehen ist, dadurch gekennzeichnet, daß die Linse eine positive Brennweite F besitzt, die kürzer als die wirksame Länge ist, wobei die besagte Brennweite F, die besagte wirksame Länge L, der besagte wirksame Radius R und der besagte Brechungsindex n₁ den folgenden Formeln (I) und (II) genügen;
$\text{F/L = tan(sin⁻¹(NA/n₁))/tan(sin⁻¹(NA)) I}$
$\text{R ≧ L ·tan(sin⁻¹(NA/n₁)) II}$
worin NA die numerische Apertur der besagten optischen Faser ist.

2. Eine Kollimatorlinse nach Anspruch 1, dadurch gekennzeichnet, daß das besagte zylindrische Bauteil aus einem Material gebildet ist, das aus der aus Acrylharz, Polystyrolharz, Silikonharz und Fluorharz bestehenden Gruppe ausgewählt ist.

3. Eine Kollimatorlinse nach Anspruch 1, dadurch gekennzeichnet, daß die besagte optische Faser einen Kern besitzt, der aus einem aus der aus Polymethylmethacrylat, Polystyrol und Polycarbonat bestehenden Gruppe ausgewählten Material gebildet ist.

4. Eine Kollimatorlinse nach Anspruch 1, dadurch gekennzeichnet, daß sie weiter eine Angleichflüssigkeit zwischen der lichtemittierenden Stirnfläche der besagten optischen Faser und der besagten Linse umfaßt.

## Revendications

1. Lentille de collimation comprenant un élément cylindrique présentant un rayon efficace R et une longueur efficace L, ledit élément cylindrique étant formé en un matériau transparent optiquement présentant un indice de réfraction de n₁, ledit élément cylindrique comportant une partie d'extrémité circulaire munie d'une partie de connecteur connectée à une fibre optique, l'autre partie d'extrémité circulaire étant munie d'une lentille de Fresnel, caractérisée en ce que la lentille présente une distance focale positive F qui est inférieure à la longueur efficace, ladite distance focale F, ladite longueur efficace L, ledit rayon efficace R et ledit indice de réfraction n₁ satisfaisant les formules suivantes (I) et (II) :
$\text{F/L = tg (sin-¹ (NA/n₁))/tg (sin-¹ (NA)) (I)}$
$\text{R≧L.tg (sin-¹ (NA/n₁)) (II)}$
où NA est l'ouverture numérique de ladite fibre optique.

2. Lentille de collimation selon la revendication 1, dans laquelle ledit élément cylindrique est formé en un matériau choisi parmi le groupe qui comprend une résine acrylique, une résine polystylénique, une résine silicone et une résine fluorée.

3. Lentille de collimation selon la revendication 1, dans laquelle ladite fibre optique comporte une âme formée en un matériau choisi parmi le groupe qui contient le polyméthylméthacrylate, le polystylène et le polycarbonate.

4. Lentille de collimation selon la revendication 1, comprenant en outre un liquide d'adaptation placé entre la face d'extrémité émettrice de lumière de ladite fibre optique et ladite lentille.
